# EUROPEAN PATENT APPLICATION

(11) **EP 4 589 213 A1**
(43) Date of publication of application: **23.07.2025**
(21) Application number: 22960594.4
(22) Date of filing: 25.11.2022
(51) Int. Cl.: F24S 20/40, F24H 9/20, F24H 4/02, F24D 3/18, H02J 3/38

(54) **PHOTOVOLTAIC-BASED HEAT PUMP WATER HEATER CONTROL METHOD AND APPARATUS, AND DEVICE AND STORAGE MEDIUM**

(30) Priority: 27.09.2022 CN 202211185590
(71) Applicant: Midea Group Co., Ltd., Foshan, Guangdong 528311 (CN); GD Midea Air-Conditioning Equipment Co., Ltd., Foshan, Guangdong 528311 (CN)
(72) Inventor: LV, Mengxin, Foshan, Guangdong 528311 (CN); ZHU, Jiansheng, Foshan, Guangdong 528311 (CN); HUANG, Zhaobin, Foshan, Guangdong 528311 (CN); JIANG, Haihao, Foshan, Guangdong 528311 (CN); HU, Yuanxiang, Foshan, Guangdong 528311 (CN); ZENG, Xianjie, Foshan, Guangdong 528311 (CN); QIU, Yu, Foshan, Guangdong 528311 (CN); LI, Zhiyong, Foshan, Guangdong 528311 (CN)
(74) Representative: Ran, Handong
(86) International application number: PCT/CN2022/134443
(87) International publication number: WO 2024/065997

(57) **Abstract**

The present application belongs to the technical field of electrical engineering. Disclosed are a photovoltaic-based heat pump water heater control method and apparatus, and a device and a storage medium. The method comprises: acquiring power load information and photovoltaic power generation information; determining electricity surplus information according to the power load information and the photovoltaic power generation information; and controlling a heat pump water heater to perform load migration according to the electricity surplus information.

## Description

### CROSS-REFERENCE TO RELATED APPLICATIONS

The present application claims priority to Chinese Patent Application No. 202211185590.0, filed on September 27, 2022. The disclosure of the above-mentioned application is incorporated herein by reference in its entirety.

### TECHNICAL FIELD

The present application relates to the technical field of electrical engineering, and in particular to a photovoltaic-based heat pump water heater control method, a photovoltaic-based heat pump water heater control apparatus, a photovoltaic-based heat pump water heater control device and a storage medium.

### BACKGROUND

At present, photovoltaic power generation has penetrated into thousands of households and has become an important source of electricity in family life, which is both economical and clean.

However, the biggest disadvantage of photovoltaic power generation is instability, which is seriously affected by weather and time. Therefore, the time of power generation is uncontrollable; the cost of using batteries as energy storage devices in family scenarios is very high while the time of household power consumption and the time of power generation may not match. Therefore, how to avoid the waste of photovoltaic power generation caused by the inconsistency between the time of power consumption and the time of power generation has become a technical problem that needs to be solved urgently.

The above content is only used to assist in understanding the technical solution of the present application, and does not mean that the above content is recognized as prior art.

### SUMMARY

The main purpose of the present application is to provide a photovoltaic-based heat pump water heater control method, a photovoltaic-based heat pump water heater control apparatus, a photovoltaic-based heat pump water heater control device and a storage medium, aiming to solve the technical problem of waste in photovoltaic power generation in the prior art.

To achieve the above purpose, the present application proposes a photovoltaic-based heat pump water heater control method, the method includes the following steps:
obtaining power load information and photovoltaic power generation information;
determining power consumption surplus information according to the power load information and the photovoltaic power generation information; and
controlling the heat pump water heater to perform load migration according to the power consumption surplus information.

In an embodiment, the controlling the heat pump water heater to perform load migration according to the power consumption surplus information includes:
determining a power consumption state according to the power consumption surplus information;
in response to the power consumption state being photovoltaic surplus, obtaining an operation state of the heat pump water heater; and
controlling the heat pump water heater to perform load migration according to the operation state of the heat pump water heater.

In an embodiment, the determining the power consumption state according to the power consumption surplus information includes:
determining a starting power of the heat pump water heater and a starting margin of the heat pump water heater; and
determining the power consumption state according to the starting power of the heat pump water heater, the starting margin of the heat pump water heater and the power consumption surplus information.

In an embodiment, the controlling the heat pump water heater to perform load migration according to the operation state of the heat pump water heater includes:
obtaining usage information of the heat pump water heater in response to the operation state of the heat pump water heater being a start state;
determining a first working parameter of the heat pump water heater according to the usage information of the heat pump water heater; and
controlling the heat pump water heater to perform load migration according to the first working parameter.

In an embodiment, the first working parameter includes:
in response to the usage information of the heat pump water heater being in use, a to-be-reached water temperature of the heat pump water heater is a user-set temperature, and power is supplied to the heat pump water heater by the photovoltaic power generation; and
in response to the usage information of the heat pump water heater being not in use, the to-be-reached water temperature of the heat pump water heater is a maximum target water temperature, the maximum target water temperature is greater than the user-set temperature, and power is supplied to the heat pump water heater by the photovoltaic power generation.

In an embodiment, in the first working parameter, in response to that the photovoltaic power generation is insufficient to supply power to the heat pump water heater, supplementing the heat pump water heater by power grid.

In an embodiment, the in response to the usage information of the heat pump water heater being not in use, supplying power to the heat pump water heater by the photovoltaic power generation includes:
obtaining a current water temperature of the heat pump water heater;
in response to the current water temperature being lower than the user-set temperature, operation frequency of the heat pump water heater is greater than rated power of the heat pump water heater; and
in response to the current water temperature being greater than the user-set temperature and less than the maximum target water temperature, the operation frequency of the heat pump water heater is minimum value between power of the photovoltaic electricity generation and the rated power of the heat pump water heater.

In an embodiment, the controlling the heat pump water heater to perform load migration according to the operation state of the heat pump water heater includes:
in response to the operation state of the heat pump water heater being a non-start state, obtaining requirement information of the heat pump water heater;
determining a second working parameter of the heat pump water heater according to the requirement information of the heat pump water heater; and
controlling the heat pump water heater to perform load migration according to the second working parameter.

In an embodiment, the second working parameter includes:
in response to the requirement information of the heat pump water heater being no usage requirement, in response to the power consumption state being the photovoltaic surplus and time of duration meeting a start-up condition of the heat pump water heater, the to-be-reached water temperature of the heat pump water heater is the maximum target water temperature, and power is supplied to the heat pump water heater by the photovoltaic power generation.

In an embodiment, in the second working parameter, in response to the photovoltaic power generation is insufficient to supply power to the heat pump water heater, stopping operation of the heat pump water heater.

In an embodiment, in the second working parameter, in response to the requirement information of the heat pump water heater being having a usage requirement, in response to the power consumption state being the photovoltaic surplus and the time of duration meeting the start-up condition of the heat pump water heater, obtaining the usage information of the heat pump water heater, determining the first working parameter of the heat pump water heater according to the usage information of the heat pump water heater, and controlling the heat pump water heater to perform load migration according to the first working parameter.

In an embodiment, the controlling the heat pump water heater to perform load migration according to the power consumption surplus information further includes:
in response to the heat pump water heater performing load migration, determining a power consumption surplus state according to the power consumption surplus information; and
in response to the power surplus state being still surplus, connecting surplus quantity of electricity to grid or abandoning the surplus quantity of electricity.

In an embodiment, after the determining a power consumption surplus state according to the power consumption surplus information, the method further includes:
in response to the power consumption state being no surplus, obtaining load information and the usage information of the heat pump water heater;
determining an essential load or a non-essential load according to the load information;
shutting down the non-essential load, and supplying power to the essential load by the photovoltaic power generation;
in response to the usage information of the heat pump water heater being in use, supplying power to the heat pump water heater by power grid.

The present application further proposes another photovoltaic-based heat pump water heater control method, including:
obtaining a connection state with power grid;
in response to the connection state with the power grid being grid-connected, executing the method described in any of the above-mentioned solutions; and
in response to the connection state with the power grid being off-grid, obtaining off-grid information, power load information and photovoltaic power generation information; in response to the off-grid information being the first off-grid information, determining power consumption surplus information according to the power load information and the photovoltaic power generation information, and controlling the heat pump water heater to perform load migration according to the power consumption surplus information.

In an embodiment, the controlling the heat pump water heater to perform load migration according to the power consumption surplus information includes:
determining the power consumption state according to the power consumption surplus information;
in response to the power consumption surplus information being the photovoltaic surplus, supplying power to the heat pump water heater by photovoltaic power generation; in response to the photovoltaic power generation is insufficient to supply power to the heat pump water heater, stopping operation of the heat pump water heater; and
in response to the power consumption state being no surplus of photovoltaic power, shutting down power supply for the heat pump water heater, and shutting down non-essential load.

In an embodiment, in response to the off-grid information being a second off-grid information, shutting down the heat pump water heater, and determining load power supply information according to the power load information and the photovoltaic power generation information;
in response to the load power supply information being sufficient, shutting down a non-essential load; and
in response to the load power supply information being insufficient, shutting down the non-essential load, and shutting down a part of essential loads according to a priority level of the essential loads.

In addition, to achieve the above purpose, the present application further proposes a photovoltaic-based heat pump water heater control apparatus, including:
an obtaining module, configured for obtaining power load information and photovoltaic power generation information;
a processing module, configured for determining power consumption surplus information according to the power load information and the photovoltaic power generation information; and
a control module, configured for controlling the heat pump water heater to perform load migration according to the power consumption surplus information.

In addition, to achieve the above-mentioned purpose, the present application further proposes a photovoltaic-based heat pump water heater control device, including: a memory, a processor, and a photovoltaic-based heat pump water heater control program stored in the memory and executable on the processor, and the photovoltaic-based heat pump water heater control program is configured for implementing the photovoltaic-based heat pump water heater control method as described above.

In addition, to achieve the above-mentioned purpose, the present application further proposes a storage medium, a photovoltaic-based heat pump water heater control program is stored on the storage medium, and the photovoltaic-based heat pump water heater control method as described above is implemented when the photovoltaic-based heat pump water heater control program is executed by a processor.

The present application obtains power load information and photovoltaic power generation information, determines power consumption surplus information according to the power load information and the photovoltaic power generation information, and controls the heat pump water heater to perform load migration according to the power consumption surplus information. According to the situation of photovoltaic power generation, on the basis that the photovoltaic power generation supplies daily load, excess quantity of electricity is used to power the heat pump water heater, the electric energy is converted into thermal energy in the water storage tank of the heat pump water heater, and the electric energy is stored in another way, thus solving the problem that the staggered power generation time and the power consumption time are staggered. When the quantity of electricity generation is large, the water heater with energy storage function is fully charged, and hot water can be used even if the photovoltaic cannot generate electricity when using, thus improving the utilization rate of photovoltaic power generation, and avoiding the waste of photovoltaic power generation.

### BRIEF DESCRIPTION OF THE DRAWINGS

FIG. 1 is a schematic structural diagram of a photovoltaic-based heat pump water heater control device in a hardware operating environment according to an embodiment of the present application.
FIG. 2 is a schematic flow chart of a photovoltaic-based heat pump water heater control method according to a first embodiment of the present application.
FIG. 3 is a schematic diagram of a structural use case of a photovoltaic-based heat pump water heater control method according to an embodiment of the present application.
FIG. 4 is a schematic flow chart of a photovoltaic-based heat pump water heater control method according to a second embodiment of the present application.
FIG. 5 is a structural block diagram of a photovoltaic-based heat pump water heater control apparatus according to the first embodiment of the present application.

The realization of the purpose, functional features and advantages of the present application will be further explained in conjunction with the embodiments and with reference to the accompanying drawings.

### DETAILED DESCRIPTION OF THE EMBODIMENTS

It should be understood that the specific embodiments described herein are only used to explain the present application and are not used to limit the present application.

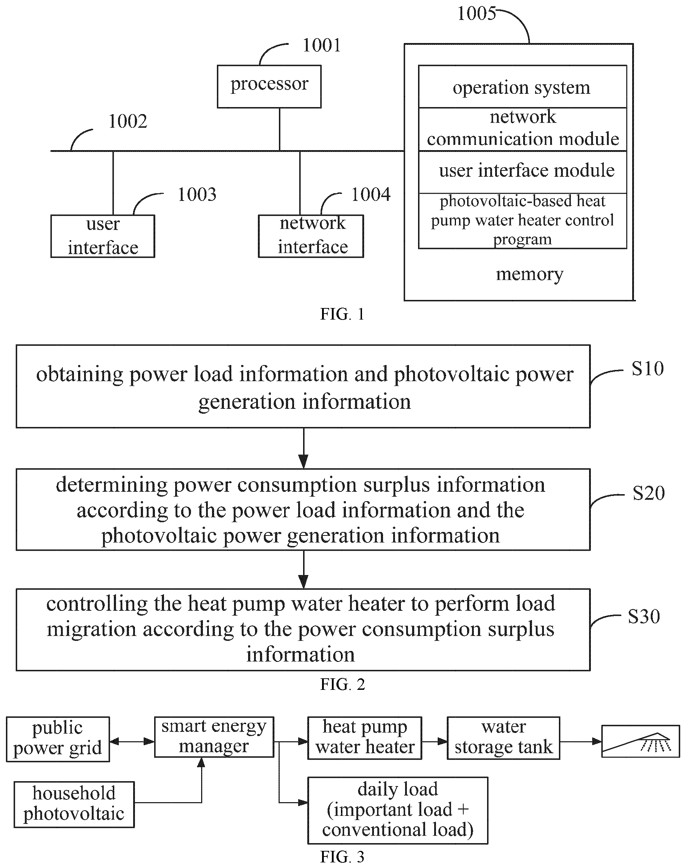

Referring to FIG. 1, FIG. 1 is a schematic structural diagram of a photovoltaic-based heat pump water heater control device in a hardware operating environment according to an embodiment of the present application.

As shown in FIG. 1, the photovoltaic-based heat pump water heater control device may include: a processor 1001, such as a central processing unit (CPU), a communication bus 1002, a user interface 1003, a network interface 1004 and a memory 1005. The communication bus 1002 is configured to realize connection communication among these components. The user interface 1003 may include a display screen (Display), an input unit such as a keyboard. The user interface 1003 may further include a standard wired interface or a wireless interface. The network interface 1004 may include a standard wired interface or a wireless interface (such as a Wireless-Fidelity (Wi-Fi) interface). The memory 1005 can be a high-speed random access memory (RAM), or a stable non-volatile memory (NVM), such as a disk memory. In an embodiment, the memory 1005 may further be a storage device independent of the aforementioned processor 1001.

Those skilled in the art can understand that the structure shown in FIG. 1 does not constitute a limitation on the photovoltaic-based heat pump water heater control device, and may include more or less components than shown in the figure, or combinations of certain components, or components arranged differently.

As shown in FIG. 1, the memory 1005 as a storage medium may include an operation system, a network communication module, a user interface module, and a photovoltaic-based heat pump water heater control program.

In the photovoltaic-based heat pump water heater control device shown in FIG. 1, the network interface 1004 is mainly configured for data communication with the network server, and the user interface 1003 is mainly configured for data interaction with the user. The processor 1001 and the memory 1005 in the photovoltaic-based heat pump water heater control device of the present application can be provided in the photovoltaic-based heat pump water heater control device, and the photovoltaic-based heat pump water heater control device calls the photovoltaic-based heat pump water heater control program stored in the memory 1005 by the processor 1001, and executes the photovoltaic-based heat pump water heater control method provided in the embodiment of the present application.

An embodiment of the present application provides a photovoltaic-based heat pump water heater control method. Referring to FIG. 2, FIG. 2 is a schematic flow chart of a photovoltaic-based heat pump water heater control method according to a first embodiment of the present application.

**In** an embodiment, the photovoltaic-based heat pump water heater control method includes the following steps.

Step S10, obtaining power load information and photovoltaic power generation information.

It should be noted that the execution subject of the present application may be an energy management system, which may be set in a smart energy manager, or in a smart power management device, or may be set in other devices with the same or similar functions as the smart energy manager. The present application does not limit this, and only uses the smart energy manager as the form of the execution subject for explanation.

It should be noted that the present application is applied to household power consumption scenarios. Due to the difference between household photovoltaic power generation and actual household power consumption time, when there is no electric energy storage device in the home, the power generation efficiency and power load cannot be matched, resulting in the loss of redundant electric energy. For example, the most efficient time period for photovoltaic power generation generally is the morning, noon and afternoon when the sun is sufficient, but the actual peak electricity consumption is often at night, which results in the waste of power generation during the daytime and users can only rely on the power grid for power supply at night, which is not very economical. Therefore, in order to solve this problem, this solution proposes to use a heat pump water heater, which is an electrical appliance with large heat storage capacity, as an intermediate medium to convert solar energy into heat energy for storage, so as to supply users with hot water needs at night.

The present application proposes a solution: a household photovoltaic heat pump water heater system is composed of photovoltaic power generation, mains supply, smart energy manager, heat pump water heater and daily loads such as lighting, fans, etc. Daily loads do not include heat pump water heater. Daily loads can be divided into important loads and conventional loads according to their importance. The smart energy manager mainly realizes the linkage operation control of heat pump water heaters in two ways: 1) the heat pump water heater itself has a trigger interface such as photovoltaic operation mode; 2) the energy manager sends control strategy or logic to the heat pump water heater for execution by communication. The overall operation mode of the system is mainly divided into grid-connected mode and off-grid mode. The grid-connected mode means that the smart energy manager is connected to the power grid. When the photovoltaic power generation does not meet the power consumption of the heat pump water heater and the daily load, it can be supplemented by the power grid. When the photovoltaic power generation is greater than the power consumption of the heat pump water heater and the daily load, if the photovoltaic electric energy is allowed to enter the power grid, the photovoltaic surplus power is connected to the grid; if the photovoltaic electric energy is not allowed to enter the power grid, the photovoltaic surplus power is abandoned. The present application provides a structural use case in a household power supply system, as shown in FIG. 3, the input of the power supply end is controlled by the smart energy manager, the power supply end is the public power grid on one hand and the user photovoltaic installed by the user on the other hand, and then the input electric energy is managed and distributed to different load ends. The focus of the present application is on the control of the heat pump water heater, and the energy migration is completed by the heat pump water heater.

It can be understood that power load information refers to the load conditions of each electrical appliance in the household and the basic information of the electrical appliance. For example, the current total power of each electrical appliance, the operation status usage plan of each electrical appliance, the starting power of the heat pump water heater, the starting margin setting power value when the fixed-frequency heat pump water heater uses photovoltaic power generation to start, the starting time of the fixed-frequency heat pump water heater, the initial water tank water temperature, the user-set target water temperature, the maximum heating water temperature of the heat pump water heater, the actual heating water temperature, etc.

In addition, photovoltaic power generation information is information such as the power of electricity generation of the current photovoltaic, power generation plan, and prediction of subsequent power generation situation. For example, when photovoltaic electric energy is not allowed to enter the power grid, photovoltaic power generation information may include the quantity of abandoned light and the quantity of electricity of photovoltaic abandoned light that the photovoltaic power generation surplus cannot be grid-connected; when photovoltaic electric energy is allowed to enter the power grid, photovoltaic power generation information may include the quantity of electricity of photovoltaic grid connection, photovoltaic sustainable power generation time, etc.

Step S20, determining power consumption surplus information according to the power load information and the photovoltaic power generation information.

It should be noted that the power load information indicates the current household power consumption situation and power consumption plan, while the photovoltaic power generation information indicates the photovoltaic power generation situation and power generation plan. The combination of the two can determine whether the current power generation is surplus or predict whether there will be a surplus. According to the surplus situation, a data basis can be provided for the subsequent household electrical appliance load planning.

It should be noted that the power consumption surplus information can be the surplus power or surplus electricity calculated by the load end A (electrical appliance) and the power generation end B (photovoltaic), or the surplus power generation obtained by the total usage power and the total power of photovoltaic electricity generation information. The present application does not limit the object referred to by the electrical appliance at the load end A. In some embodiments, the electrical appliance at the load end A is a daily load.

Step S30, controlling the heat pump water heater to perform load migration according to the power consumption surplus information.

It can be understood that after obtaining the power consumption surplus information, the usage power, water tank water level, target temperature and other information of the heat pump water heater can be controlled according to the power consumption surplus situation. When the power consumption surplus is more sufficient, the control parameters of the heat pump water heater, such as the usage power, water tank water level and target temperature, can be set higher.

It should be noted that the load migration here refers to converting the electric energy obtained from photovoltaic power generation into the thermal energy of water in the water storage apparatus by the heat pump water heater to complete the migration of the power load. For example, when the user needs to use hot water at night, the heating of water in the heat pump water heater can be migrated to the photovoltaic power generation time period during the daytime.

In an embodiment, in response to the heat pump water heater performing load migration, determining a power consumption surplus state according to the power consumption surplus information; and in response to the power surplus state being still surplus, connecting surplus quantity of electricity to grid or abandoning the surplus quantity of electricity. When photovoltaic electric energy is allowed to enter the power grid, surplus electricity is connected to the grid. When photovoltaic electric energy is not allowed to enter the power grid, the surplus electricity is abandoned.

It should be noted that the above-mentioned surplus state refers to whether the quantity of electricity generation of photovoltaic is still in a state of redundant power generation when the heat pump water heater performs load migration. If there is still redundant power generation at this time, this part of the quantity of electricity generation may be wasted. Therefore, the surplus electric energy can be connected to the grid to send the redundant electric energy to the power grid.

In the present application, power load information and photovoltaic power generation information are obtained. The power consumption surplus information is determined according to the power load information and the photovoltaic power generation information, and the heat pump water heater is controlled to perform load migration according to the power consumption surplus information. According to the situation of photovoltaic power generation, on the basis that the photovoltaic power generation supplies daily load, excess electric energy is used to power the heat pump water heater. The electric energy is converted into thermal energy in the water storage tank of the heat pump water heater, and the electric energy is stored in another way, to solve the problem that the staggered power generation time and the power consumption time are staggered. When the quantity of electricity generation is large, the water heater with energy storage function is fully charged, and hot water can be used even if the photovoltaic power is unavailable, thus improving the utilization rate of photovoltaic power generation, and avoiding the waste of photovoltaic power generation.

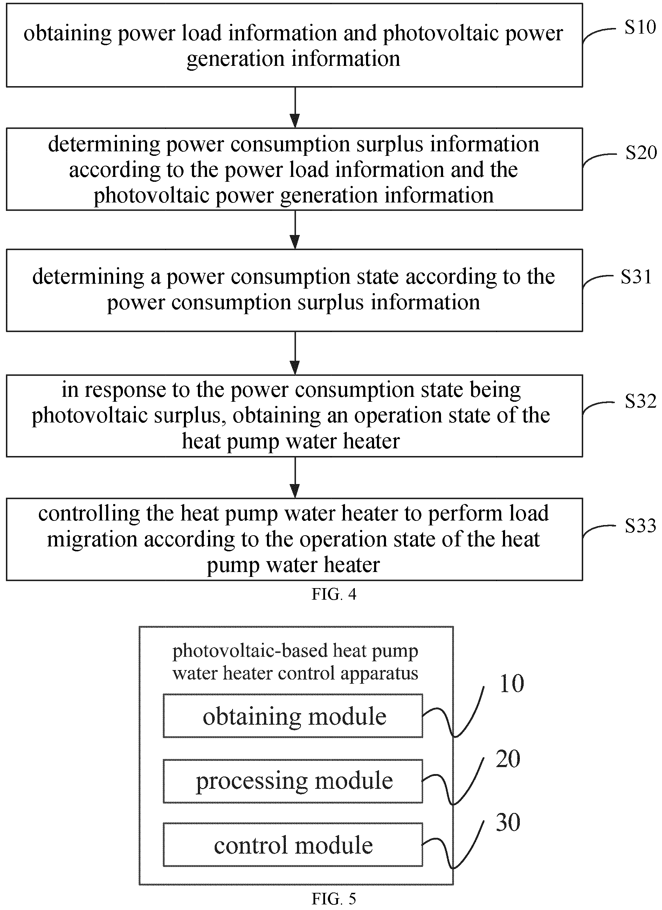

Referring to FIG. 4, FIG. 4 is a schematic flow chart of a photovoltaic-based heat pump water heater control method according to a second embodiment of the present application.

Based on the above-mentioned first embodiment, in the step S30, the photovoltaic-based heat pump water heater control method of the present application further includes:
step S31, determining a power consumption state according to the power consumption surplus information.

It can be understood that the power consumption state is the information about whether the surplus power or surplus quantity of electricity calculated by the load end A (electrical appliance) and the power generation end B (photovoltaic) can support the operation of the load end C (such as the heat pump water heater), or the power consumption state can be the residual electricity generation power obtained by the total usage power and the total photovoltaic power generation, and the residual power is used to determine whether the load end C can be supported. The present application does not limit the expression form of the power consumption state.

In an embodiment, for a fixed-frequency heat pump water heater, a starting power of the heat pump water heater and a starting margin of the heat pump water heater are determined according to the power load information; and the power consumption state is determined according to the starting power of the heat pump water heater, the starting margin of the heat pump water heater and the power consumption surplus information.

It should be noted that when the fixed-frequency heat pump water heater is started, the instantaneous power may be much greater than the actual starting power, and the part exceeding the starting power is the starting margin. Therefore, whether the current surplus power of the photovoltaic power can exceed the sum of the starting power of the heat pump water heater and the starting margin of the heat pump water heater can be used as a standard for determining whether the power consumption is surplus. The surplus power refers to the remaining power after deducting other basic household loads from the power of photovoltaic electricity generation.

In the specific implementation, it is necessary to determine the power consumption state because photovoltaic power generation is given priority to supply daily load applications to meet the immediate power consumption requirement of daily loads. After meeting these requirements, different operations are performed according to the surplus situation of photovoltaic power generation. When photovoltaic electric energy is allowed to enter the power grid, the surplus situation of photovoltaic power generation is determined: if Pgrid > Php_start + △P, it is considered that photovoltaic power generation is surplus; if Pgrid < Php_start + △P or Pgrid < Php_start, it is considered that photovoltaic power generation is insufficient. Pgrid is the grid-connected power of the power grid, Php_start is the starting power of the heat pump water heater, and △P is the starting margin of the heat pump water heater. When photovoltaic electric energy is not allowed to enter the power grid, the above-mentioned Pgrid is replaced with Ppv_wst, and the surplus situation of photovoltaic power generation is determined: if Ppv_wst > Php_start +△P, it is considered that photovoltaic power generation is surplus; if Ppv_wst < Php_start +△P or Ppv_wst<Php_start, it is considered that photovoltaic power generation is insufficient. Ppv_wst is the abandoned power of photovoltaic power generation surplus that cannot be grid-connected. When photovoltaic power generation is insufficient, reminder operations can be performed: 1) reminding the user to shut down some conventional loads; 2) if the load is an important load or the conventional load must be turned on, the power grid will automatically supplement the part where photovoltaic power generation is insufficient; 3) if there is a demand for hot water at this time, the heat pump water heater will operate according to its own logic and be powered by the power grid.

For the variable frequency heat pump water heater, determining the power consumption state according to the power consumption surplus information includes: when photovoltaic electric energy is allowed to enter the power grid, determining the photovoltaic power generation surplus situation: if Pgrid > 0, considering that the photovoltaic power generation is surplus; if Pgrid < 0, considering that the photovoltaic power generation is insufficient. Pgrid is the grid-connected power of the power grid. When photovoltaic electric energy is not allowed to enter the power grid, the photovoltaic power generation surplus is determined: if Ppv_wst > 0, it is considered that the photovoltaic power generation is surplus; if Ppv_wst < 0, it is considered that the photovoltaic power generation is insufficient. Ppv_wst is the amount of abandoned light that cannot be grid-connected due to the photovoltaic power generation surplus. The variable frequency heat pump water heater has a soft start function, and its power during the start-up process is not high, so it can be started quickly. If the photovoltaic power is insufficient to support the start-up process, the power grid can be used to supplement power to ensure normal startup.

In addition, when the photovoltaic power generation is in surplus, if the heat pump water heater has been started, different operations are performed according to whether the hot water is currently being used. If the hot water is being used, photovoltaic power is used for rapid heating (according to the operation logic of the heat pump water heater, if the electric heating is required to be started for rapid heating, the electric heating is performed for rapid heating, or the operation power of the heat pump water heater, such as the variable frequency heat pump water heater, is increased for rapid heating). If the photovoltaic power generation cannot fully meet the required power of the heat pump water heater for heating, it is supplemented by the power grid. While the heat pump water heater is heating or after the temperature is reached, if the photovoltaic power is still surplus, the excess power can be grid-connected or abandoned. In this case, it is preferred to keep the water temperature heated by the heat pump water heater at the user-set temperature to avoid excessive water temperature. If hot water is not currently used, the water temperature of the heat pump water heater is adjusted from the user-set temperature Tset (such as 55°C) to the maximum target water temperature Tmax (such as 70°C) and then supplied by photovoltaic power generation. In this case, the hot water temperature can be increased for thermal energy storage. For the variable frequency heat pump water heater, if the heat pump water heater has been started and the hot water is not used, the operation power of the heat pump water heater can be further controlled according to the current water temperature. The current water temperature is T_init. If the current water temperature T_init < T_set, the operation frequency of the heat pump water heater is not limited, and heating is performed quickly. If the photovoltaic power is insufficient, the power will be supplemented by the power grid. If T_set ≤T_init≤T_max, when the power of photovoltaic electricity generation is less than the rated operation power of the heat pump water heater, heating is performed slowly according to the power of photovoltaic electricity generation, and heating is stopped when the photovoltaic power is insufficient. When the power of photovoltaic electricity generation is greater than the rated operation power of the heat pump water heater, heating is performed according to the rated power of the heat pump water heater; the photovoltaic surplus is selected to be grid-connected or abandoned according to whether the photovoltaic electric energy is connected to the power grid.

If photovoltaic power generation cannot fully meet the required power of the heat pump water heater for heating, it will be supplemented by the power grid. While the heat pump water heater is heating or after reaching the temperature, if there is still surplus photovoltaic power generation, the surplus photovoltaic power generation will be grid-connected or abandoned.

Further, it should be noted that since some areas do not agree to connect private photovoltaics to the grid, it is necessary to adjust according to the household power consumption mode. When the area allows for photovoltaic power generation to be connected to the grid, the remaining power after supplying the heat pump water heater can be grid-connected. However, if the area does not allow personal photovoltaic grid connection, it is necessary to abandon the light.

Step S32. in response to the power consumption state being photovoltaic surplus, obtaining an operation state of the heat pump water heater.

It should be noted that, when the power consumption state is photovoltaic surplus, it means that the power generation power of the photovoltaic or quantity of electricity generation of the photovoltaic is still surplus after supporting the basic load requirement of the user. In order not to waste it, the operation state of the heat pump water heater can be obtained, to perform targeted control on the photovoltaic water heater according to the operation state of the heat pump water heater, and to preserve the redundant electric energy in the photovoltaic power generation to the greatest extent.

It can be understood that the operation state of the heat pump water heater may include the start state of the heat pump water heater, the power on/off state of the heat pump water heater, whether the heat pump water heater is using hot water, etc. The start state of the heat pump water heater refers to whether the heat pump water heater is in a standby state. The power on/off state of the heat pump water heater refers to the start state or shutdown state of the heat pump water heater set by the user on the hand operator or the wire controller. The power on/off state of the heat pump water heater reflects the requirement information of the user for using the heat pump water heater. Whether the heat pump water heater is using hot water refers to whether the user is using the hot water in the heat pump water heater.

Step S33, controlling the heat pump water heater to perform load migration according to the operation state of the heat pump water heater.

It can be understood that different energy storage conditions can be obtained according to the operation state of the heat pump water heater. For example, when the heat pump water heater has an operation plan, the original operation plan can be adjusted according to the photovoltaic power generation situation, to complete the hot water work in advance or change the hot water efficiency and increase the upper limit of the water temperature.

In an embodiment, obtaining usage information of the heat pump water heater in response to the operation state of the heat pump water heater being a start state; determining a first working parameter of the heat pump water heater according to the usage information of the heat pump water heater; and controlling the heat pump water heater to perform load migration according to the first working parameter. The first working parameter can includes: when the heat pump water heater is in use, a to-be-reached water temperature of the heat pump water heater is a user-set temperature, and the heat pump water heater is powered by photovoltaic power generation; and when the usage information of the heat pump water heater is not in use, the to-be-reached water temperature of the heat pump water heater is a maximum target water temperature, the maximum target water temperature being greater than the user-set temperature, and the heat pump water heater is powered by photovoltaic power generation.

When the operation state of the heat pump water heater is the start state, energy can be supplied to the heat pump water heater as quickly as possible for use, which can improve the working efficiency of the heat pump water heater, and improve the target hot water temperature. For example, if hot water is being used, photovoltaic electricity is used for rapid heating (according to the operation logic of the heat pump water heater, if electric heating is started for rapid heating, performing electric heating for rapid heating, or increasing the power of the heat pump water heater, such as the variable frequency heat pump water heater, for rapid heating); if photovoltaic power generation cannot fully meet the required power of the heat pump water heater for heating, it is supplemented by the power grid (no need to supplement in the off-grid state); while heating the heat pump water heater or after reaching the temperature, photovoltaic power generation that is still surplus will be connected to the grid or abandoned. If hot water is not currently used, the heat pump water heater will adjust the to-be-reached water temperature from the user-set temperature Tset (such as 55°C) to the maximum target water temperature Tmax (such as 70°C) and then be supplied by photovoltaic power generation. If photovoltaic power generation cannot fully meet the required power of the heat pump water heater for heating, for example, it cannot meet the required power for heating after the heat pump water heater is started, it will be supplemented by the power grid (no need to supplement in the off-grid state); while heating the heat pump water heater or after reaching the temperature, photovoltaic power generation that is still surplus will be connected to the grid (abandoned if grid-connected is not possible).

In an embodiment, when the operation state of the heat pump water heater is a non-start state, requirement information of the heat pump water heater is obtained; a second working parameter of the heat pump water heater is determined according to the requirement information of the heat pump water heater; and the heat pump water heater is controlled to perform load migration according to the second working parameter.

It can be understood that the non-start state is divided into the power-on state and the power-off state. When the operation state of the heat pump water heater is the power-off state, that is, when the requirement information of the heat pump water heater is no usage requirement, it proves that the user does not limit the use of the heat pump water heater, so the smart energy manager can perform a higher degree of freedom control by the second working parameter. The second working parameter is the working strategy of the heat pump water heater when the operation state of the heat pump water heater is the non-start state. For example, when the heat pump water heater is not started to operate, the user sets the power-on/off state to perform different operations. If the user sets it to power-off state, it is assumed that the user has no requirement for hot water. At this time, it is necessary to determine whether the photovoltaic surplus and the subsequent time of duration of power generation meet the start-up condition of the heat pump water heater (when photovoltaic electric energy is allowed to enter the power grid, Pgrid > Php_start + △P, and Tpv_last > Thp_start; when photovoltaic electric energy is not allowed to enter the power grid, Ppv_wst > Php_start + △P, and Tpv_last > Thp_start); after the to-be-reached water temperature of the heat pump water heater is adjusted from the user-set temperature T_set (such as 55°C) to the maximum target water temperature T_max (such as 70°C), it is supplied by photovoltaic power generation. After the target water temperature is reached, the heat pump water heater is shut down. If there is still surplus in photovoltaic power generation, it will be grid-connected or abandoned; if photovoltaic power generation only supports the water temperature of the heat pump water heater to T_real (such as 40°C, 65°C, etc.) during this period, the heat pump water heater stops operating when photovoltaic power generation is insufficient. Pgrid is the grid-connected power of the power grid; Ppv_wst is the abandoned power of photovoltaic power generation surplus that cannot be grid-connected; hp_start is the starting power of the heat pump water heater; △P is the setting power value of starting margin of the fixed-frequency heat pump water heater when using photovoltaic power generation to start; Tpv_last is sustainable photovoltaic power generation time; and Thp_start is starting time of the fixed-frequency heat pump water heater.

It should be noted that when the operation state of the heat pump water heater is the non-start state, if the user sets it to the power-on state, that is, when the requirement information of the heat pump water heater is having a usage requirement, it is determined that the photovoltaic surplus and the time of duration of the power generation are sufficient to support the start-up operation of the heat pump (when the photovoltaic electric energy is allowed to enter the power grid, Pgrid>Php_start+ΔP, and Tpv_last>Thp_start; when the photovoltaic electric energy is not allowed to enter the power grid, Ppv_wst>Php_start+△P, and Tpv_last>Thp_start), then the heat pump water heater starts operating according to its logic, that is, different operations are performed according to whether the hot water is currently being used. If the hot water is in use, the photovoltaic electricity is used for rapid heating (according to the operation logic of the heat pump water heater, if the electric heating is required to start rapid heating, the electric heating is performed for rapid heating; or the operation power of the heat pump water heater is increased for rapid heating). If the photovoltaic power generation cannot fully meet the required power of the heat pump water heater for heating, it will be supplemented by the power grid; while heating the heat pump water heater or after reaching the temperature, the photovoltaic power generation that is still surplus will be grid-connected or abandoned. In this situation, it is preferred to keep the water temperature heated by the heat pump water heater at the user-set temperature to avoid the water temperature being too high. If hot water is not currently used, after adjusting the to-be-reached water temperature of the heat pump water heater is adjusted from the user-set temperature T_set (such as 55°C) to the maximum target water temperature T_max (such as 70°C), it is supplied by photovoltaic power generation. In this situation, the hot water temperature can be increased for thermal energy storage. If the photovoltaic power generation cannot fully meet the required power of the heat pump water heater for heating, it will be supplemented by the power grid; while heating the heat pump water heater or after reaching the temperature, the photovoltaic power generation that is still surplus will be grid-connected or abandoned. Certainly, for the variable frequency heat pump water heater, the operation power of the heat pump water heater can also be controlled in sections according to the current water temperature. As long as the photovoltaic surplus and the time of duration of power generation are sufficient to support the start-up operation of the heat pump, the photovoltaic power generation can be supplied to the heat pump water heater, so that the heat pump water heater can operate completely according to the plan set by the user, that is, the second working parameter of the heat pump water heater. Until the user's plan is met, the remaining power will be grid-connected or abandoned.

When the operation state of the heat pump water heater is the non-start state, if the photovoltaic is insufficient or the time of duration of the photovoltaic power generation is insufficient to support the heat pump start-up operation, the heat pump water heater will not start.

It should be noted that this solution can achieve the best use effect when the electricity generation power of the photovoltaic surplus and the quantity of capable electricity generation of the photovoltaic surplus are consistent with the operation power of the heat pump water heater and the required quantity of electricity.

In an embodiment, when the power consumption state is that there is no surplus of photovoltaic power, load information and the usage information of the heat pump water heater are obtained; and the heat pump water heater is controlled to perform load migration according to the load information and the usage information of the heat pump water heater.

It should be noted that when the power consumption state is that there is no surplus of photovoltaic power, it means that the current power consumption requirement is large and cannot meet the energy transfer requirement of the heat pump water heater. At this time, it may be that the user must use electricity, or the user may forget to shut down a certain power function, resulting in power waste. Therefore, the user can be reminded to observe whether the current conventional load is an essential load according to the conventional load information, or some non-essential loads are shut down according to the pre-set settings. For example, it is set that when the power of photovoltaic electricity generation is insufficient during the daytime to transfer energy to the heat pump water heater, specific electrical appliances are shut down. In this process, priority is given to ensuring power supply to important loads. Important loads and necessary conventional loads can be collectively referred to as essential loads, and non-essential conventional loads can be referred to as non-essential loads. At this time, the heat pump water heater is generally no longer controlled to perform load migration according to the operation state of the heat pump water heater. If the conventional load is essential load or there is still no surplus of photovoltaic power after the non-essential load is shut down, the power grid will supplement the insufficient part of the photovoltaic power generation to supply power for the daily load including the conventional load. If hot water is needed, the grid will supply power to the heat pump water heater, and the heat pump water heater will operate according to its logic. If hot water is not needed, the heat pump water heater will be shut down.

The present application determines a power consumption state according to the power consumption surplus information, obtains an operation state of the heat pump water heater in response to the power consumption state being photovoltaic surplus, and controls the heat pump water heater to perform load migration according to the operation state of the heat pump water heater. By the above-mentioned method, the speed or efficiency of load migration is determined according to the operation state of the heat pump water heater, to ensure that the maximum energy transfer can be achieved under different quantity of the power consumption surplus, thereby improving the utilization rate of electric energy and avoiding energy waste.

In an embodiment, the off-grid mode is a situation where the smart energy manager is disconnected from the public power grid, possibly due to a power outage, which is a very common situation. In the off-grid mode, it is necessary to determine first whether the off-grid has lasted for a relatively long time. For example, the off-grid caused by bad weather or a large-scale fault in the power grid usually lasts for a relatively long time. If it is a situation that lasts for a relatively long time (the off-grid information is the first off-grid information), when the photovoltaic power generation is sufficient, only the essential load or even only the important load is supplied; when the photovoltaic power generation is insufficient, some essential loads or important loads are shut down according to the priority level of the essential load or the important load. Whether the photovoltaic power generation is sufficient can be obtained by determining the load power supply information according to the power load information and the photovoltaic power generation information. If it does not last for a relatively long time (the off-grid information is the second off-grid information), the photovoltaic power generation gives priority to meeting the energy requirement of daily loads; in the situation where the energy requirement of daily load is met, if there is a surplus of photovoltaic, priority is given to perform heat storage by the heat pump water heater; when photovoltaic power generation is insufficient to heat the water in the heat pump water heater to the required temperature, the heat pump water heater stops operating. If photovoltaic power generation is insufficient to support the energy requirement of daily loads, some non-essential loads are shut down to ensure the power supply of important loads. There is a situation where photovoltaic grid-connected mode and off-grid mode are switched. When the grid-connected mode is switched to the off-grid mode, if the heat pump water heater is in the operation state at the moment of switching, it will be shut down; after completing the switching, the heat pump water heater operates according to the off-grid operation logic. When the off-grid mode is switched to the grid-connected mode, the heat pump does not work at the moment of switching, which does not affect the switching; after completing the switching, the heat pump water heater operates according to the grid-connected operation logic.

In addition, the embodiment of the present application further proposes a storage medium, a photovoltaic-based heat pump water heater control program is stored on the storage medium, and the photovoltaic-based heat pump water heater control method described above is implemented when the photovoltaic-based heat pump water heater control program is executed by a processor.

Referring to FIG. 5, FIG. 5 is a structural block diagram of a photovoltaic-based heat pump water heater control apparatus according to the first embodiment of the present application.

As shown in FIG. 5, the photovoltaic-based heat pump water heater control apparatus proposed in the embodiment of the present application includes: an obtaining module 10, a processing module 20 and a control module 30.

The obtaining module 10 is configured for obtaining power load information and photovoltaic power generation information.

The processing module 20 is configured for determining power consumption surplus information according to the power load information and the photovoltaic power generation information.

The control module 30 is configured for controlling the heat pump water heater to perform load migration according to the power consumption surplus information.

It should be understood that the above is only an example and does not constitute any limitation on the technical solution of the present application. In specific applications, those skilled in the art can make settings as needed, and the present application does not limit this.

In the present application, the obtaining module 10 obtains power load information and photovoltaic power generation information, the processing module 20 determines power consumption surplus information according to the power load information and the photovoltaic power generation information, and the control module 30 controls the heat pump water heater to perform load migration according to the power consumption surplus information. According to the situation of photovoltaic power generation, on the basis that the photovoltaic power generation supplies daily load, the excess electricity is used to power the heat pump water heater, the electric energy is converted into thermal energy in the water storage tank of the heat pump water heater, and the electric energy is stored in another way, thus solving the problem that the power generation time and the power consumption time are staggered. When the quantity of electricity generation is large, the water heater with energy storage function is fully charged, and hot water can be used even if the photovoltaic power generation is unavailable when using, thus improving the utilization rate of photovoltaic power generation, and avoiding the waste of photovoltaic power generation.

In an embodiment, the control module 30 is further configured for determining a power consumption state according to the power consumption surplus information;
in response to the power consumption state being photovoltaic surplus, obtaining an operation state of the heat pump water heater; and
controlling the heat pump water heater to perform load migration according to the operation state of the heat pump water heater.

In an embodiment, the control module 30 is further configured for determining a starting power of the heat pump water heater and a starting margin of the heat pump water heater; and
determining the power consumption state according to the starting power of the heat pump water heater, the starting margin of the heat pump water heater and the power consumption surplus information.

In an embodiment, the control module 30 is further configured for obtaining usage information of the heat pump water heater in response to the operation state of the heat pump water heater being a start state;
determining a first working parameter of the heat pump water heater according to the usage information of the heat pump water heater; and
controlling the heat pump water heater to perform load migration according to the first working parameter.

In an embodiment, the control module 30 is further configured for, in response to the usage information of the heat pump water heater being in use, a to-be-reached water temperature of the heat pump water heater is a user-set temperature, and supplying power to the heat pump water heater by photovoltaic power generation; and
in response to the usage information of the heat pump water heater being not in use, the to-be-reached water temperature of the heat pump water heater is a maximum target water temperature, the maximum target water temperature being greater than the user-set temperature, and supplying power to the heat pump water heater by photovoltaic power generation.

In an embodiment, the control module 30 is further configured for obtaining a current water temperature of the heat pump water heater;
in response to the current water temperature being lower than the user-set temperature, operation frequency of the heat pump water heater is greater than rated power of the heat pump water heater; and
in response to the current water temperature being greater than the user-set temperature and less than the maximum target water temperature, the operation frequency of the heat pump water heater is minimum value between power of the photovoltaic electricity generation and the rated power of the heat pump water heater.

In an embodiment, the control module 30 is further configured for obtaining requirement information of the heat pump water heater in response to the operation state of the heat pump water heater being a non-start state;
determining a second working parameter of the heat pump water heater according to the requirement information of the heat pump water heater; and
controlling the heat pump water heater to perform load migration according to the second working parameter.

In an embodiment, the control module 30 is further configured for, in response to the requirement information of the heat pump water heater being no usage requirement, in response to the power consumption state being the photovoltaic surplus and time of duration meeting a start-up condition of the heat pump water heater, the to-be-reached water temperature of the heat pump water heater is the maximum target water temperature, and supplying power to the heat pump water heater by the photovoltaic power generation.

In an embodiment, the control module 30 is further configured for, in response to the usage information of the heat pump water heater being that the heat pump water heater is in use, the to-be-reached water temperature of the heat pump water heater is the user-set temperature, and supplying power to the heat pump water heater by the photovoltaic power generation; and
in response to the usage information of the heat pump water heater being that the heat pump water heater is not in use, the to-be-reached water temperature of the heat pump water heater is the maximum target water temperature, the maximum target water temperature is greater than the user-set temperature, and supplying power to the heat pump water heater by the photovoltaic power generation.

In an embodiment, the control module 30 is further configured for determining a power consumption surplus state according to the power consumption surplus information in response to the heat pump water heater performing load migration; and
connecting surplus quantity of electricity to grid or abandoning the surplus quantity of electricity in response to the power surplus state being still surplus.

In an embodiment, the control module 30 is further configured for obtaining load information and the usage information of the heat pump water heater in response to the power consumption state being no surplus;
determining essential loads or non-essential loads according to the load information;
shutting down the non-essential load, and supplying power to the essential load by the photovoltaic power generation;
supplying power to the heat pump water heater by power grid in response to the usage information of the heat pump water heater being in use.

In an embodiment, the control module 30 is further configured for, in response to the power consumption surplus information being the photovoltaic surplus, supplying power to the heat pump water heater by photovoltaic power generation; in response to the photovoltaic power generation is insufficient to supply power to the heat pump water heater, stopping operation of the heat pump water heater; and
in response to the power consumption state being no surplus of photovoltaic power, shutting down power supply for the heat pump water heater, and shutting down non-essential load.

In an embodiment, the control module 30 is further configured for, in response to the off-grid information being a second off-grid information, shutting down the heat pump water heater, and determining load power supply information according to the power load information and the photovoltaic power generation information;
in response to the load power supply information being sufficient, shutting down non-essential load; and
in response to the load power supply information being insufficient, shutting down the non-essential load, and shutting down part of essential load according to a priority level of essential load.

In an embodiment, the control module 30 is further configured for, in response to the connection state with the power grid being switched between the grid-connected and the off-grid, in response to the heat pump water heater being in an operation state, stopping operation of the heat pump water heater.

It should be noted that the workflow described above is only illustrative and does not limit the scope of the present application. In practical applications, those skilled in the art can select part or all of them according to actual needs to achieve the purpose of the present application scheme, and no limitation is made here.

In addition, for technical details not described in detail in an embodiment, please refer to the photovoltaic-based heat pump water heater control method provided in any embodiment of the present application, which will not be repeated here.

In addition, it should be noted that in the present application, the terms "comprise", "include" or any other variation thereof are intended to cover a non-exclusive inclusion, such that a process, method, article or system that includes a list of elements not only includes those elements, but also includes other elements not expressly listed, or also includes elements inherent to the process, method, article or system. In a case of without further restrictions, an element defined by the statement "includes······" does not exclude the existence of other identical elements in a process, method, article or system that includes this element.

The above-mentioned serial numbers of the embodiments of the present application are only for description and do not represent the advantages and disadvantages of the embodiments.

By the above description of the embodiments, those skilled in the art can clearly understand that the methods of the above embodiments can be implemented by means of software plus the necessary general hardware platform, and they can also be done by hardware certainly, but in many cases the former is the better implementation. Based on this understanding, the technical solution of the present application essentially or the part that contributes to the related art can be embodied in the form of a software product, the computer software product is stored in a storage medium (such as read only memory image (ROM)/random access memory (RAM), diskette, optical disk), which includes several instructions to cause a terminal device (which can be a mobile phone, computer, server, or network device, etc.) to execute the methods described in various embodiments of the present application.

The above are only some embodiments of the present application, and are not intended to limit the scope of the present application. Under the concept of the present application, any equivalent structure transformation made by using the description and accompanying drawings of the present application, or directly or indirectly applied in other related technical fields, is included within the scope of the present application.

## Claims

1. A photovoltaic-based heat pump water heater control method, comprising:
obtaining power load information and photovoltaic power generation information;
determining power consumption surplus information according to the power load information and the photovoltaic power generation information; and
controlling the heat pump water heater to perform load migration according to the power consumption surplus information.

2. The photovoltaic-based heat pump water heater control method according to claim 1, wherein said controlling the heat pump water heater to perform load migration according to the power consumption surplus information comprises:
determining a power consumption state according to the power consumption surplus information;
in response to the power consumption state being photovoltaic surplus, obtaining an operation state of the heat pump water heater; and
controlling the heat pump water heater to perform load migration according to the operation state of the heat pump water heater.

3. The photovoltaic-based heat pump water heater control method according to claim 2, wherein said determining the power consumption state according to the power consumption surplus information comprises:
determining a starting power of the heat pump water heater and a starting margin of the heat pump water heater; and
determining the power consumption state according to the starting power of the heat pump water heater, the starting margin of the heat pump water heater and the power consumption surplus information.

4. The photovoltaic-based heat pump water heater control method according to claim 2, wherein said controlling the heat pump water heater to perform load migration according to the operation state of the heat pump water heater comprises:
obtaining usage information of the heat pump water heater in response to the operation state of the heat pump water heater being a start state;
determining a first working parameter of the heat pump water heater according to the usage information of the heat pump water heater; and
controlling the heat pump water heater to perform load migration according to the first working parameter.

5. The photovoltaic-based heat pump water heater control method according to claim 4, wherein the first working parameter comprises that:
in response to the usage information of the heat pump water heater being in use, a to-be-reached water temperature of the heat pump water heater is a user-set temperature, and the heat pump water heater is powered by the photovoltaic power generation; and
in response to the usage information of the heat pump water heater being not in use, the to-be-reached water temperature of the heat pump water heater is a maximum target water temperature which is greater than the user-set temperature, and the heat pump water heater is powered by the photovoltaic power generation.

6. The photovoltaic-based heat pump water heater control method according to claim 5, wherein in response to that the photovoltaic power generation is insufficient to supply power to the heat pump water heater, power grid is used to supplement the power supply.

7. The photovoltaic-based heat pump water heater control method according to claim 5, wherein said in response to the usage information of the heat pump water heater being not in use, the heat pump water heater being powered by the photovoltaic power generation comprises:
obtaining a current water temperature of the heat pump water heater;
in response to the current water temperature being lower than the user-set temperature, operation frequency of the heat pump water heater is greater than rated power of the heat pump water heater; and
in response to the current water temperature being greater than the user-set temperature and less than the maximum target water temperature, the operation frequency of the heat pump water heater is a minimum value between power of the photovoltaic electricity generation and the rated power of the heat pump water heater.

8. The photovoltaic-based heat pump water heater control method according to claim 2, wherein said controlling the heat pump water heater to perform load migration according to the operation state of the heat pump water heater comprises:
in response to the operation state of the heat pump water heater being a non-start state, obtaining requirement information of the heat pump water heater;
determining a second working parameter of the heat pump water heater according to the requirement information of the heat pump water heater; and
controlling the heat pump water heater to perform load migration according to the second working parameter.

9. The photovoltaic-based heat pump water heater control method according to claim 8, wherein the second working parameter comprises that:
in response to the requirement information of the heat pump water heater being no usage requirement, if the power consumption state is the photovoltaic surplus and time of duration meets a start-up condition of the heat pump water heater, the to-be-reached water temperature of the heat pump water heater is the maximum target water temperature, and the heat pump water heater is powered by the photovoltaic power generation.

10. The photovoltaic-based heat pump water heater control method according to claim 9, wherein in response to the photovoltaic power generation is insufficient to supply power to the heat pump water heater, operation of the heat pump water heater stops.

11. The photovoltaic-based heat pump water heater control method according to claim 9, wherein in response to the requirement information of the heat pump water heater being having a usage requirement, if the power consumption state is the photovoltaic surplus and the time of duration meets the start-up condition of the heat pump water heater, the usage information of the heat pump water heater is obtained, the first working parameter of the heat pump water heater is determined according to the usage information of the heat pump water heater, and the heat pump water heater is controlled to perform load migration according to the first working parameter.

12. The photovoltaic-based heat pump water heater control method according to claim 11, wherein the first working parameter comprises that:
in response to the usage information of the heat pump water heater being that the heat pump water heater is in use, the to-be-reached water temperature of the heat pump water heater is the user-set temperature, and the heat pump water heater is powered by the photovoltaic power generation; and
in response to the usage information of the heat pump water heater being that the heat pump water heater is not in use, the to-be-reached water temperature of the heat pump water heater is the maximum target water temperature, the maximum target water temperature is greater than the user-set temperature, and the heat pump water heater is powered by the photovoltaic power generation.

13. The photovoltaic-based heat pump water heater control method according to any one of claims 1 to 12, wherein the method further comprises after said controlling the heat pump water heater to perform load migration according to the power consumption surplus information,
in response to the heat pump water heater performing the load migration, determining a power consumption surplus state according to the power consumption surplus information; and
in response to the power surplus state being still surplus, connecting surplus quantity of electricity to grid or abandoning the surplus quantity of electricity.

14. The photovoltaic-based heat pump water heater control method according to any one of claims 1 to 12, wherein the method further comprises after said determining a power consumption surplus state according to the power consumption surplus information,
in response to the power consumption state being no surplus, obtaining load information and the usage information of the heat pump water heater;
determining an essential load or a non-essential load according to the load information;
shutting down the non-essential load, and supplying power to the essential load by the photovoltaic power generation; and
in response to the usage information of the heat pump water heater being in use, supplying power to the heat pump water heater by power grid.

15. A photovoltaic-based heat pump water heater control method, comprising:
obtaining a connection state with power grid;
in response to the connection state with the power grid being grid-connected, executing the method according to any one of claims 1 to 14;
in response to the connection state with the power grid being off-grid, obtaining off-grid information, power load information and photovoltaic power generation information; and
in response to the off-grid information being first off-grid information, determining power consumption surplus information according to the power load information and the photovoltaic power generation information, and controlling the heat pump water heater to perform load migration according to the power consumption surplus information.

16. The photovoltaic-based heat pump water heater control method according to claim 15, wherein said controlling the heat pump water heater to perform load migration according to the power consumption surplus information comprises:
in response to the power consumption surplus information being the photovoltaic surplus, supplying power to the heat pump water heater by photovoltaic power generation, and in response to the photovoltaic power generation is insufficient to supply power to the heat pump water heater, stopping operation of the heat pump water heater; and
in response to the power consumption state being no surplus of photovoltaic power, shutting down power supply for the heat pump water heater, and shutting down a non-essential load.

17. The photovoltaic-based heat pump water heater control method according to claim 15, further comprising:
in response to the off-grid information being second off-grid information, shutting down the heat pump water heater, and determining load power supply information according to the power load information and the photovoltaic power generation information;
in response to the load power supply information being sufficient, shutting down a non-essential load; and
in response to the load power supply information being insufficient, shutting down the non-essential load, and shutting down a part of essential loads according to a priority level of the essential loads.

18. The photovoltaic-based heat pump water heater control method according to claim 15, further comprising:
in response to the connection state with the power grid being switched between the grid-connected and the off-grid, and the heat pump water heater being in an operation state, stopping operation of the heat pump water heater.

19. A photovoltaic-based heat pump water heater control apparatus, comprising:
an obtaining module, configured for obtaining power load information and photovoltaic power generation information;
a processing module, configured for determining power consumption surplus information according to the power load information and the photovoltaic power generation information; and
a control module, configured for controlling the heat pump water heater to perform load migration according to the power consumption surplus information.

20. A photovoltaic-based heat pump water heater control device, comprising:
a memory;
a processor; and
a photovoltaic-based heat pump water heater control program stored in the memory and executable on the processor, wherein the photovoltaic-based heat pump water heater control program is configured for implementing the photovoltaic-based heat pump water heater control method according to any one of claims 1 to 18.

21. A storage medium, wherein a photovoltaic-based heat pump water heater control program is stored on the storage medium, and the photovoltaic-based heat pump water heater control method according to any one of claims 1 to 18 is implemented when the photovoltaic-based heat pump water heater control program is executed by a processor.
